# EUROPÄISCHE PATENTSCHRIFT

(11) **EP 2 528 721 B1**
(45) Veröffentlichungstag und Bekanntmachung des Hinweises auf die Patenterteilung: **18.03.2015**
(21) Anmeldenummer: 11704554.2
(22) Anmeldetag: 26.01.2011
(51) Int. Cl.: B29C 45/27, B29C 45/28, B29C 45/30

(54) **KUNSTSTOFFSPRITZWERKZEUG UND VERFAHREN ZUM KUNSTSTOFFSPRITZEN**
PLASTIC INJECTION TOOL AND METHOD FOR PLASTIC INJECTION
OUTIL ET PROCÉDÉ D'INJECTION DE PLASTIQUE

(30) Priorität: 26.01.2010 DE 102010000196
(43) Veröffentlichungstag der Anmeldung: 05.12.2012
(73) Patentinhaber: RPC Bramlage GmbH, 49393 Lohne (DE)
(72) Erfinder: HACKMANN, Bernd, 49393 Lohne (DE)
(74) Vertreter: Müller, Enno
(86) Internationale Anmeldenummer: PCT/EP2011/051005
(87) Internationale Veröffentlichungsnummer: WO 2011/092170

(56) Entgegenhaltungen:
- DE-A1- 19 535 717
- DE-A1-102008 018 351
- US-A- 4 438 064
- US-A- 5 118 280

## Beschreibung

Die Erfindung betrifft zunächst ein Kunststoffspritzwerkzeug nach den Merkmalen des Oberbegriffs des Anspruches 1.

Weiter betrifft die Erfindung ein Verfahren zur Durchführung eines Kunststoffspritzverfahrens nach den Merkmalen des Oberbegriffes des Anspruches 4.

Derartige Kunststoffspritzwerkzeuge bzw. Verfahren zum Kunststoffspritzen sind bereits in verschiedenen Ausgestaltungen bekannt geworden. Es wird beispielsweise auf die DE19956215C2, DE29609356U1, DE202008006865U1 und die DE102004033469B3 verwiesen. Im Hinblick auf eine Kühlung als solche wird auch auf die DE102005058963A1 und die DE102008000452A1 verwiesen.

Bei einem aus der US 4,438,064 bekannten Kunststoffspritzwerkzeug tritt Kühlmittel durch radiale Öffnung in eine äußere koaxiale Leitung aus. Der Austritt ist vor dem Verschlussbereich der Düsenspitze.

Zum Stand der Technik ist auch auf die DE 10 2008 018 351 B4 zu verweisen. Hieraus ist eine gekühlte Verschlussnadel bekannt. Darüber hinaus ist auf die DE 195 35 717 A1 zu verweisen. Hieraus ist eine Heißkanaldüse als solche bekannt. Darüber hinaus ist auf die US 5,118,280 A zu verweisen.

Ausgehend von dem Stand der Technik gemäß US 4,438,064 beschäftigt sich die Erfindung mit der Aufgabe, ein Kunststoffspritzwerkzeug mit einer vorteilhaft gekühlten Heißkanaldüse anzugeben. Darüber hinaus mit der Aufgabe, ein Verfahren zur Durchführung eines Kunststoffspritzverfahrens mittels einer solchen Heißkanaldüse anzugeben.

Diese Aufgabe ist hinsichtlich des Kunststoffspritzwerkzeugs durch den Gegenstand des Anspruches 1 gelöst, wobei darauf abgestellt ist, dass ein Austritt des Kühlmittels in eine Ringleitung unmittelbar in der Düsenspitze, die außenseitig eine kegelförmige, einen Verschlusswinkel ergebende Verjüngung aufweist, gegeben ist.

Hinsichtlich des Verfahrens ist darauf abgestellt, dass die Kühlung nur zeitlich abschnittsweise durchgeführt wird.

Es ist bevorzugt, dass die Kühlung mittels eines in die Spitze geleiteten Kältemittels erfolgt, wobei eine Zu- und Ableitung für das Kältemittel vorgesehen ist. Es können sich um konzentrisch angeordnete Rohre handeln.

Im Falle einer innen beheizten Heißkanaldüse kann zu diesem Zweck beispielsweise vorgesehen sein, dass ein hierfür vorgesehenes Heiztorpedo, welches in der Regel zentral in der Heißkanaldüse angeordnet ist, beispielsweise im Querschnitt kreisringförmig gebildet ist und entsprechend Zuleitungswege belässt, in welchen, auch unter einer gewissen Isolierung gegebenenfalls, das Kühlmittel zugeleitet und abgeleitet werden kann. Insbesondere ist vorgesehen, dass die erforderliche Drosselstelle oder jedenfalls der Austritt des Kühlmittels, bevorzugt flüssig, aus der Zuleitung, unmittelbar in der Düsenspitze ausgebildet ist. Als Düsenspitze ist im Rahmen der Anmeldung insbesondere derjenige Bereich der Heißkanaldüse bezeichnet, der sich außenseitig mit der den Verschlusswinkel ergebenden Verjüngung erstreckt. Diese Verjüngung ist kegelartig. Insbesondere ist angestrebt, dass die genannte Kegelspitze selbst, bzw. der genannte Bereich der Verschlussnadel oder der Bereich umgebend zur Austrittsöffnung in der Kegelspitze, etwa bei außen beheizter Heißkanaldüse, so gekühlt wird, dass sich in dem Angussbereich des abgetrennten Werkstückes praktisch keine sichtbare Oberflächenunterschiedlichkeit zu den umgebenden Bereichen mehr feststellen lassen kann.

Zeitlich kann die Kühlung insbesondere zum Ende eines Kunststoffspritzzyklus durchgeführt werden. Beginnend kurz vor dem Entformen und zeitlich beispielsweise bis zum tatsächlichen Trennen der Werkzeughälften. Eine solche intermittierende Kühlung erbringt die Kühlleistung insbesondere dann, wenn Sie zur Erzeugung der gewünschten hohen Oberflächenqualität im Bereich des Angusses erforderlich ist.

Nachstehend ist die Erfindung des Weiteren anhand der beigefügten Zeichnung, die jedoch lediglich Ausführungsbeispiele darstellt, erläutert. Hierbei zeigt:
- Fig. 1: eine schematische Querschnittsdarstellung einer Heißkanaldüse mit Außenbeheizung nicht gemäß der Erfindung;
- Fig. 2: eine Ausschnittsvergrößerung aus Fig. 1 betreffend die Düsenspitze nicht gemäß der Erfindung;
- Fig. 3: eine schematische Querschnittsansicht einer Heißkanaldüse mit Innenbeheizung;
- Fig. 4: eine Vergrößerung des Düsenspitzenbereiches der Darstellung gemäß Fig. 3;
- Fig. 5: eine schematische Querschnittsdarstellung einer Heißkanaldüse mit Verschlussnadel nicht gemäß der Erfindung, im Verschlusszustand.

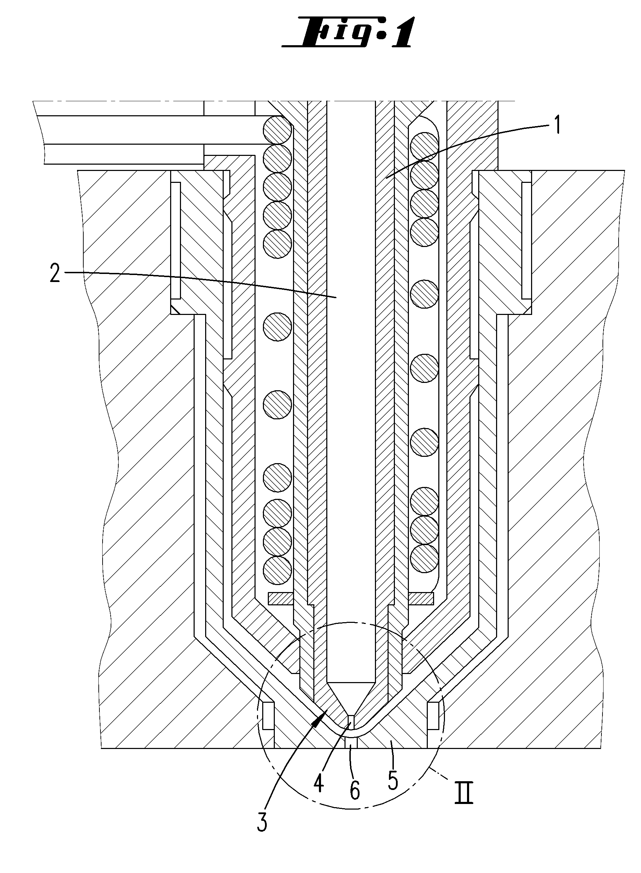

Mit Bezug zunächst zu Fig. 1 ist eine übliche außen beheizte Heißkanaldüse 1 dargestellt, die einen zentralen Massedurchleitungsweg 2 aufweist und eine Düsenspitze 3 mit einem Austrittskanal 4 in dem Einsatzteil 5 ist der Verbindungsweg 6 zum Werkzeughohlraum ausgebildet.

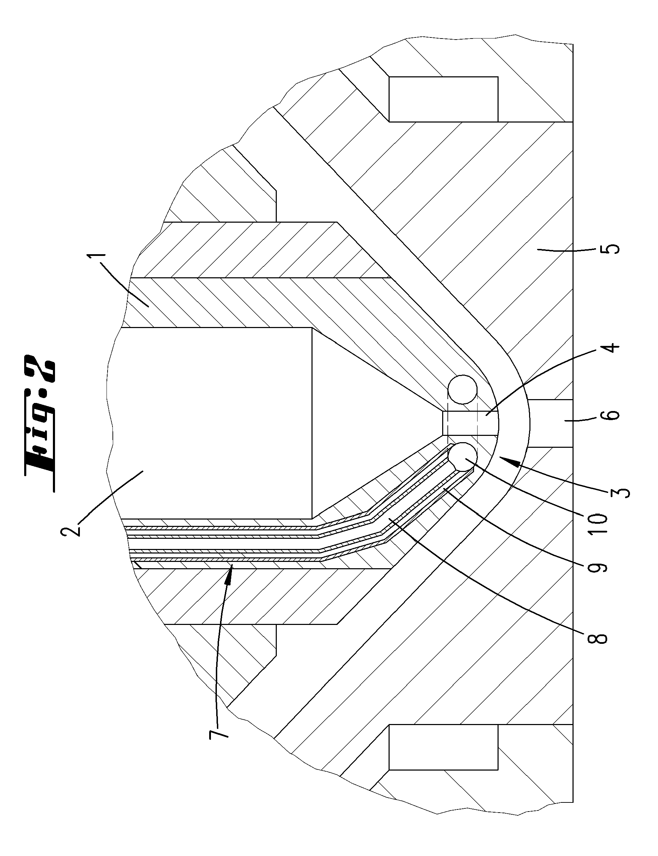

Mit Bezug zu Fig. 2 ist zu erkennen, dass mittels einer koaxial geführten Kühlmittelleitung 7, die über eine innere Zuleitung 8 und eine äußere Ableitung 9 verfügt, zunächst flüssiges Kältemittel durch die Zuleitung 8 in den Bereich der Düsenspitze 3 geleitet wird, tritt dort in eine Bohrung 10 aus, wodurch ein Entspannungseffekt und damit eine Kühlung eintritt. Die Bohrung 10 ist hier kreisringförmig zu dem Austrittsweg 4 gebildet. Sie kann aber auch zusätzlich oder allein, in Massedurchtrittsrichtung gesehen, zu einem rückwärtigeren Bereich der Düsenspitze 3 ausgebildet sein. Die Rückleitung 9 kann wie hier dargestellt koaxial vorgesehen sein, sie kann aber auch örtlich versetzt zu der Zuleitung 8 ausgebildet sein.

Ergänzend kann auch eine Kühlung in einem der Düsenspitze äußeren Bereich, wie grundsätzlich in der DE202008006865U1 beschrieben, vorgesehen sein.

In Abwandlung der Ausführungsform der Fig. 2 kann der Bereich der Bohrung 10 auch beispielsweise durch ein eingelegtes Peltier-Element gebildet sein und anstatt der Zu- und Ableitung 8, 9 können entsprechende elektrische Kabelverbindungen zur Beaufschlagung des Peltier-Elementes vorgesehen sein.

Diese Ausführung ist nicht gemäß der Erfindung. Hierbei kann vorteilhaft auch davon Gebrauch gemacht werden, dass das Peltier-Element in gleicher Weise wie es auf einer Seite kühlt, auf der anderen Seite Wärme abgibt. Darüber hinaus kann auch die gesamte Düsenspitze beispielsweise als Peltier-Element ausgebildet sein.

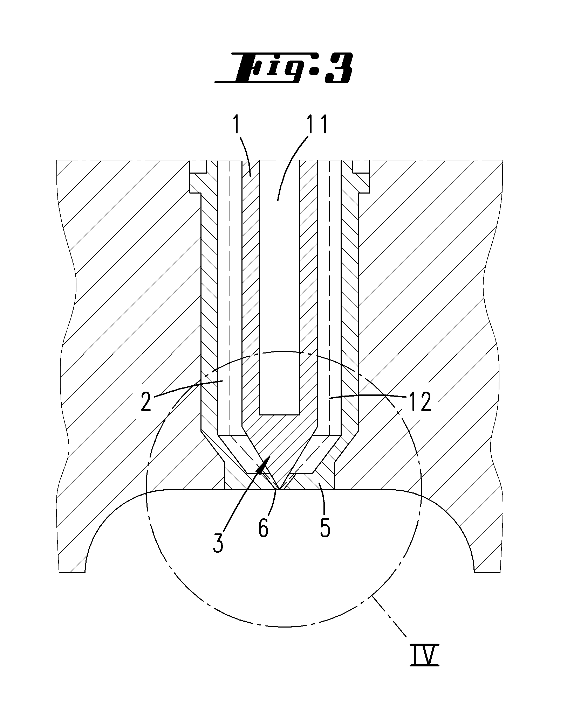

Mit Bezug zu Fig. 3 ist eine schematische Querschnittsansicht einer innen beheizten Heißkanaldüse dargestellt. Im Inneren des Düsenkörpers 1 ist ein Heiztorpedo 11 angeordnet. Der Masseweg 12 ist hier umgebend zu der Heißkanaldüse 1 ausgebildet und die Masse wird im Bereich der Heißkanaldüsenspitze 3 zusammengeführt.

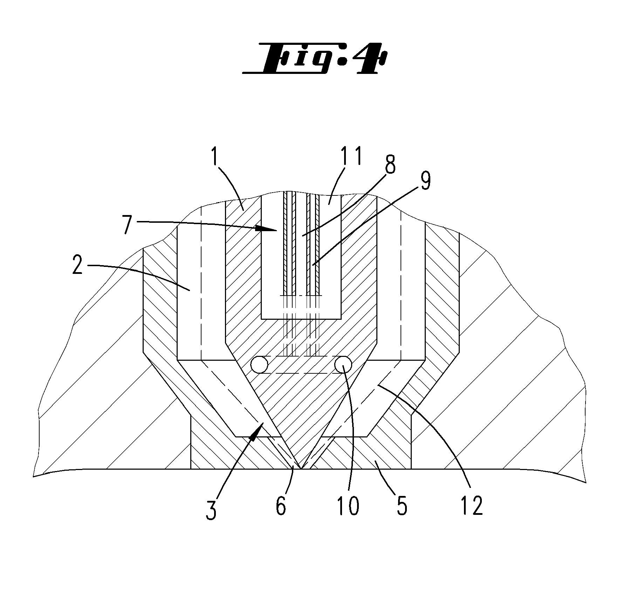

Mit Bezug zu Fig. 4 ist schematisch dargestellt, dass hier gemäß der Erfindung durch eine kreisringförmig im Querschnitt gestaltete Heizpatrone 11 die für die Zu- und Ableitung des Kühlmittels erforderlichen und grundsätzlich schon beschriebenen Zu- und Ableitungen 8, 9 durchgeführt werden können und die diesbezügliche Bohrung 10 dann in der Düsenspitze ausgebildet sein kann. Auch hier ergibt sich die notwendige Entspannung durch den Austritt des flüssigen Kühlmittels aus der sehr dünn gehaltenen Zuleitung 9.

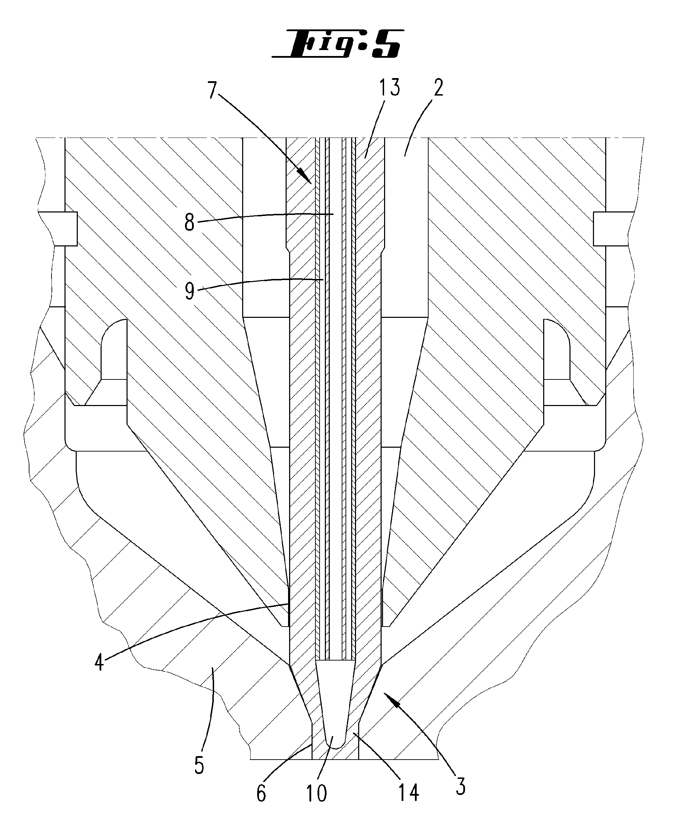

Mit Bezug zu Fig. 5 ist eine Heißkanaldüse 1 nich gemäß der Erfindung im Querschnitt dargestellt, in welcher zentral innen eine Verschlussnadel 13 angeordnet ist. Innerhalb der Verschlussnadel 13 sind auch bei dieser Ausführungsform Zu- und Ableitung 8, 9 für ein Kältemittel vorgesehen und eine Ausnehmung oder Höhlung 10, die ein verdampfendes Kältemittel somit entsprechende Kühlung der Spitze 14 der Verschlussnadel 13 ermöglicht.

Die Zu- und Ableitungen können grundsätzlich sehr dünn gehalten sein. Ihre Durchmesser können sich im Millimeter, zehntel Millimeter oder gar Mikrometer Bereich bewegen. Die Leitungen brauchen auch nicht konzentrisch zu sein sondern können auch nebeneinander ausgebildet sein. Hierbei kann die Zuleitung einen geringern Durchmesser aufweisen als die Ableitung beispielsweise. Diese Leitungen können etwa mittels Laser in den Gegenständen ausgebildet sein.

Hinsichtlich der Temperaturen ist bevorzugt, dass eine Abkühlung der Düsenspitze, speziell auch der genannten Nadelspitze, bis beispielsweise auf eine Temperatur von 50 Grad oder weniger, bis hin zu 0 Grad oder einigen wenigen Minusgraden, etwa bis Minus 5 Grad, durchgeführt wird. Hierbei sind in die Offenbarung auch alle Zwischenwerte, insbesondere in 0,5 Grad-Schritten, einbezogen, einerseits zur Eingrenzung des genannten Bereiches von unten und/oder oben andererseits aber auch zur Offenbarung einzelner Werte aus dem genannten Bereich. Üblicherweise hat ein aus der Form ausgestoßenes Teil eine Wandtemperatur von 40 Grad oder weniger. Es ist jedenfalls angestrebt, dass auch im Bereich des Angusses das gespritzte Teil diese Temperatur etwa aufweist.

## Patentansprüche

1. Kunststoffspritzwerkzeug mit einer Heißkanaldüse (1), wobei die Heißkanaldüse (1) einen von innen beheizbaren Düsenkörper (1) und eine Düsenspitze (3) aufweist und zugeordnet der Düsenspitze (3) eine Kühlung durchführbar ist, wobei weiter in einem Bereich des Düsenkörpers (1) unmittelbar an oder nahe der Düsenspitze (3) eine Kühleinrichtung vorgesehen ist, wobei die Kühlung mittels eines Kühlmittels erfolgt, für welche eine Zu- und Abflussleitung vorgesehen ist, und das Kältemittel durch einen mittleren Bereich einer im Querschnitt kreisringförmigen, im Inneren des Düsenkörpers (1) angeordneten Heizpatrone (11) geleitet ist, **dadurch gekennzeichnet, dass** ein Austritt des Kühlmittels in eine kreisringförmige Bohrung unmittelbar in der Düsenspitze, die außenseitig eine kegelförmige, einen Verschlusswinkel ergebende Verjüngung aufweist, gegeben ist.

2. Kunststoffspritzwerkzeug nach Anspruch 1, **dadurch gekennzeichnet, dass** der Austritt an einer Drosselstelle gegeben ist.

3. Verfahren zur Durchführung eines Kunststoffspritzverfahrens mittels einer Heißkanaldüse nach Anspruch 1, **dadurch gekennzeichnet, dass** die Kühlung nur zeitlich abschnittsweise durchgeführt wird.

4. Verfahren nach Anspruch 4, **dadurch gekennzeichnet, dass** die Kühlung zeitlich zugeordnet dem Ende des Spritzzyklus, kurz vor Entformen des Spritzlings durchgeführt wird.

## Claims

1. Plastics injection moulding tool having a hot runner nozzle (1), the hot runner nozzle (1) having an internally heatable nozzle body (1) and a nozzle tip (3), and wherein a cooling action, associated with the nozzle tip (3), can be carried out, furthermore a cooling device being provided in a region of the nozzle body (1) directly at or near the nozzle tip (3), the cooling action being carried out using a coolant, for which a supply line and a discharge line are provided, and the coolant being conducted through a central region of a heating cartridge (11) which has an annular cross-section and is situated inside the nozzle body (1), **characterised in that** an exit for the coolant is provided directly in the nozzle tip, and the nozzle tip has, externally, a cone-like taper that results in a shut-off angle.

2. Plastics injection moulding tool according to Claim 1, **characterised in that** the exit is provided at a throttle point.

3. Method for carrying out a plastics injection moulding process using a hot runner nozzle according to Claim 1, **characterised in that** the cooling action is carried out only intermittently.

4. Method according to Claim 3, **characterised in that** the cooling action is carried out at a time associated with the end of the injection moulding cycle, shortly before demoulding of the injection-moulded part.

## Revendications

1. Outil d'injection de matière plastique avec une buse à canal chaud (1), la buse à canal chaud (1) comprenant un corps de buse (1) pouvant être chauffé de l'intérieur et une pointe de buse (3) et, sur la pointe de buse (3), un refroidissement peut être effectué, un dispositif de refroidissement étant en outre prévu au niveau du corps de buse (1), directement sur ou à proximité de la pointe de buse (3), le refroidissement ayant lieu à l'aide d'un fluide de refroidissement, pour lequel une conduite d'admission et d'évacuation est prévue et le fluide de refroidissement est guidé à travers une zone centrale d'une cartouche chauffante (11) de section circulaire, disposée à l'intérieur du corps de buse (1), **caractérisé en ce qu'**une sortie du fluide de refroidissement s'effectue par un orifice circulaire directement dans la pointe de buse, qui présente à l'extérieur, un rétrécissement conique formant un angle de fermeture.

2. Outil d'injection de matière plastique selon la revendication 1, **caractérisé en ce que** la sortie s'effectue au niveau d'un étranglement.

3. Procédé de réalisation d'un procédé d'injection de matière plastique à l'aide d'une buse à canal chaud selon la revendication 1, **caractérisé en ce que** le refroidissement est effectué uniquement par intermittences à certains endroits.

4. Procédé selon la revendication 4, **caractérisé en ce que** le refroidissement est effectué à la fin du cycle d'injection, un peu avant le démoulage de la pièce injectée.
